# EUROPEAN PATENT SPECIFICATION

(11) **EP 3 478 221 B1**
(45) Date of publication and mention of the grant of the patent: **14.10.2020**
(21) Application number: 17743388.5
(22) Date of filing: 28.06.2017
(51) Int. Cl.: A61C 13/00, A61C 13/08

(54) **METHOD FOR THE PRODUCTION OF A DENTAL ARTICLE**
VERFAHREN ZUR HERSTELLUNG EINES DENTALEN ARTIKELS
PROCÉDÉ DE PRODUCTION D'UN ARTICLE DENTAIRE

(30) Priority: 30.06.2016 WO PCT/IT2016/000165; 23.02.2017 IT 201700020837
(43) Date of publication of application: 08.05.2019
(73) Proprietor: DWS S.R.L., 36016 Thiene (VI) (IT)
(72) Inventor: COSTABEBER, Ettore Maurizio, 36010 Zanè (VI) (IT); MAROZIN, Alessandro, 36042 Breganze (VI) (IT)
(74) Representative: Montevecchi, Emma
(86) International application number: PCT/IB2017/053870
(87) International publication number: WO 2018/002842

(56) References cited:
- US-A1- 2012 261 848
- US-A1- 2015 182 321
- US-A1- 2015 335 407

## Description

The present invention relates to a method for the production of a dental article.

In particular, the dental article can be a dental prosthesis, for example an implant crown to be coupled with a dental implant.

According to a first method of the prior art, a dental prosthesis, and more specifically an implant crown, is obtained by machining a block of metallic, ceramic, resinous materials, of zirconium dioxide or of other suitable materials, in such a way as to reproduce the shape of the original tooth. Once the shape is obtained, the crown is coated with one or more layers of ceramic material to obtain a product that is aesthetically similar to a natural tooth.

The prior art just described has the drawback that the dental prosthesis thus obtained has aesthetic differences relative to a natural tooth.

A natural tooth has non-uniform optical properties, in particular varying from the top of the tooth (incisal region) towards its neck (cervical region). Generally, this entails that the tooth appears lighter at the top than in proximity to the neck. This characteristic is the result of the layered conformation of the tooth, which determines different ways in which light is reflected, refracted and absorbed in the different areas of the tooth also according to the direction of incidence of the light.

Although the prior art described above makes it possible to select the starting material among a range of differently coloured materials in order to obtain a prosthesis that is aesthetically similar to the natural teeth of each patient, the prosthesis thus obtainable are nonetheless monochromatic, i.e. lacking those optical variations that are characteristic of a natural tooth.

An additional drawback of the prior art described above is that it requires several processing steps, with consequent lengthening of the production time.

Moreover, the presence of multiple processing steps entails the further drawback of increasing the possibility of error and, consequently, of scraps, negatively affecting the average cost of the prostheses.

The prior art described above has the additional drawback of entailing considerable wastage of material, which translates into a rise in the costs of production of each prosthesis.

Yet a further drawback of the aforesaid prior art is that the tools necessary for machining the prosthesis are subject to wear and, therefore, to a progressive degradation of machining precision. After a certain amount of time, these tools have to be changed, with consequent costs.

In the attempt to solve the aforesaid drawbacks at least in part, a variation of the aforesaid prior art provides for using, as the starting material, blocks consisting of multiple, differently coloured layers.

The aforesaid variation makes it possible to improve the aesthetic qualities of the prosthesis compared to the prior art described previously, however it has the drawback of offering a limited number of hues and gradients thereof and, therefore, it does not allow significantly approaching the infinite chromatic variety of natural teeth.

In a second prior art method for obtaining dental prostheses, described in Italian patent application no. VI2010A000353 in the name of the applicant of the present invention, an additive process is utilised, and more specifically a stereolithographic procedure, instead of a material removal process as in the previous case.

US 2015/0335407 discloses a method of making a customized dental blank comprising the steps of providing individual tooth color information, forming an open-celled dental blank precursor, providing the open-celled dental blank precursor with color in accordance with the individual tooth color information, and compressing the dental blank precursor. The method helps maximizing the optical quality of dental restoration at minimized costs.

Compared to the prior art and to the related variation described above, this second prior art method has the advantage of not requiring use of tools subject to wear and not entailing wastage of material. However, this prior art method also has the drawback of producing monochromatic prostheses.

To make the prosthesis aesthetically more similar to the patient's natural tooth, in the prior art the prosthesis obtained by stereolithography is subjected to a further surface finishing treatment, in particular to the manual application of varnishes and dyes.

It is readily understood that the aforesaid manual procedure entails similar drawbacks to those already listed in relation to the finishing of the prostheses obtained with the processes described above.

The present invention aims to make available a method for the production of a dental article that overcomes all the drawbacks of the known processes for obtaining dental prostheses described above.

In particular, an object of the invention is to make available a method for the production of a dental article that has a closer aesthetic appearance to that of a natural tooth compared to what can be obtained with the prior art processes described above.
Yet more in particular, an object of the invention is to make available a method for the production of a dental article that makes it possible to obtain dental articles in a more flexible manner than the prior art methods described above, i.e. allowing the obtainment of a higher number of different shades.

A further object of the present invention is to make available a method for the production of a dental article that manufactures dental articles more simply and rapidly than is allowed by the prior art processes described above, for example in a single processing step and with no need for superficial coatings.

The aforesaid objects are achieved by a method for the production of a dental article according to the main claim.

Additional detailed features of the method of the invention are specified in the related dependent claims.

Advantageously, the method of the invention makes it possible to produce dental articles more rapidly and more accurately than prior art methods, reducing the machining time and the related costs.

Also advantageously, the method of the invention substantially entails no wastage of material, thus limiting the cost of material.

Furthermore, advantageously, the method of the invention does not require the use of tools subject to wear, avoiding the progressive decay of the machining precision and the tool replacement costs.

In particular, the present invention relates to a method for the production of a dental article, the method comprising:
- performing a three-dimensional scan of a portion of a dental arch including at least part of a tooth;
- generating a first file containing a three-dimensional model of the at least part of tooth scanned, said three-dimensional model comprising (i) spatial coordinates, in a three-dimensional space having an elevation axis Z, of a plurality of points belonging to an outer surface of the at least part of the tooth scanned and (ii) a colour of the outer surface associated with each point of the plurality;

- processing the first file by associating a same colour with all the points having the same coordinate value in the elevation axis Z, thereby obtaining a second file;
- sending the second file to a laser stereolithography machine;
- obtaining a stereolithographic model of said at least part of tooth based on said second file by subsequent polymerization of layers of a liquid material arranged along the elevation axis Z, so as to obtain the stereolithographic model having for each coordinate value in the elevation axis Z a same colour as present in said second file which includes:
- injecting for each layer a first and a second liquid material of two different colour so as to generate said same colour; and
- scanning the layer of liquid substance by means of a laser, polymerizing it.

Therefore, according to the method of the invention, a scan is first performed of the portion of dental arch in which a prosthesis, such as a crown, is to be positioned. The scan, by means of an appropriate intraoral scanner, creates a file containing information about the portion of dental arch of interest, in particular a three-dimensional geometric representation thereof is obtained. From the scan it is therefore possible, through a usual processor such as a personal computer, to have a three-dimensional representation of the portion of dental arch of interest and it is preferably possible to display said geometric representation in different positions according to the selected display angle.

Therefore the file obtained from the intraoral scanner is a file containing the coordinates in a Cartesian coordinate system of a plurality of points of the surface of the portion of dental arch of interest, sufficiently numerous to form a 3D representation of the scanned portion. The more numerous the points, the more precise the image obtained. Substantially, the intraoral scanner obtains a "digital impression" of the portion of dental arch of interest. The information obtained with an intraoral scan does not differ significantly from the information obtained in any other 3D scan.

The file obtained can by produced directly by the intraoral scanner or by an additional intermediate apparatus to which the scanner data are provided, for example a personal computer.

However, according to the invention, in addition to the position information of various points of the surface in a three-dimensional space, at each point whose coordinates are determined, the scanner - or another associated apparatus - also determines additional information about the colour of the portion of the tooth in that point.

In other words, the method of the invention includes determining a value of the colour of points on the surface of the portion of dental arch of interest. This determination can be carried out by the dental scanner itself, or by a dedicated apparatus able to determine surface colours.

Therefore, for a plurality of points on the surface of the portion of dental arch of interest, a file is generated containing the coordinates (x, y, z) of the point on the surface as well as a value of the colour, for example in RGB coordinates or in another manner, of the surface of the tooth. Therefore every point of the file contains an information of the type (x, y, z, value of colour in that (x,y,z)).

As indicated above, the file can be generated directly by the scanner, placing in a single file the geometry and colour data determined thereby, or by another apparatus that joins in a single file colour data coming from a dedicated apparatus with geometry data coming from the scanner.

It is well known that a set of teeth has different colours in different points. Generally, for example, the upper part of the tooth is darker than the rest of the tooth, while the part close to the gum can be darker relative to an intermediate portion of tooth. Therefore, it is known that chromatic differences exist within a tooth. However, reproducing all chromatic differences, for example at each point, in a model would be very expensive and it would make the production of such a model economically inefficient.

Therefore, according to the invention the file described above is processed in a distinct file that makes production of the dental prosthesis model rapid and efficient, while maintaining a chromatic variation therein that approaches a faithful representation of the portion of tooth of interest or is a good substitute thereof.

Therefore, for each z coordinate of the original file, i.e. for all points having the same z coordinate, a single colour is assigned.

For example, to the points whose z coordinate value is z1, i.e. (x1,y1,z1), (x2,y2,z1), (x3,y3,z1)...etc. having colour value colour1, colour2, colour3, a single colour is assigned, equal to single_colour.

The geometric representation of the tooth portion is substantially divided into planes parallel to the z axis and to each of these planes is assigned a single colour.

Hence, a colour differentiation is maintained within the geometric representation, but this variation depends solely on the value of the z coordinate. To points having different x and y coordinates, but the same value of z, the assigned value of the colour is the same. Therefore, instead of having a colour variation in 3 distinct variables, x, y, and z, there is still a variation - not monochrome - but limited in a single variable.

Therefore, a second file is created, in which is assigned this colouring, which depends solely on the variation of the z coordinate.

This file is processed by a stereolithography machine so as to obtain a stereolithographic model of the portion of tooth.

In stereolithography, resin levels made one over the other along the axis of z coordinates are polymerized. In each of these levels, the coordinates (x,y,z) of each point of the surface of the portion of dental arch of interest are used to make the surface of the model, and the value of single_colour is used for each distinct level.

Preferably, for multiple different levels of resin, the same value of single_colour is used.

The single_colour for each z is made by mixing together resins having a different colour. According to the invention, for each level two different resins of different colours are injected, which are mixed to each other before polymerization.

By varying the quantity of a resin of one colour and that of the resin of the other colour, it is possible for each level to obtain a different colour shade.

Described below are preferred features of the method for the production of a dental article according to the present invention, which can be provided individually or in combination with each other.

Preferably, for a certain coordinate value in the elevation axis Z, said same colour is calculated depending on the colours of the points of the outer surface for such coordinate value in the elevation axis Z as present in the first file.

Advantageously, the colour chosen as common for all points having a same value of z, single_colour, depends on the value of the colours of the various points as determined by the dental scanner. In this way, a certain degree of realism is preserved in the generation of the model.

Preferably, said same colour is a colour averaged among the colours of the points present in the first file having such coordinate value in the elevation axis Z.

Preferably, said same colour is the colour present the most number of times in the points present in the first file having such coordinate value in the elevation axis Z.

Advantageously, the colour chosen as single_colour for a certain value of z is the result of a statistical processing of the colour values of the various points having that z.

Preferably, processing the first file by associating a same colour with all the points having the same coordinate value in the elevation axis Z includes:
- associating a same first colour with all the points of the first file having coordinates values in the elevation axis Z within a first range;
- associating a same second colour with all the points of the first file having coordinate values in the elevation axis Z within a second range;
- associating with each point of the first file having a value of elevation coordinate Z within a third range of values of elevation coordinate Z comprised between the last value of elevation coordinate Z of the first range and the first value of elevation coordinate Z of the second range, a colour equal to a colour gradient between the same first colour and the second same colour, the colour gradient depending on the value of the elevation coordinate Z in the third range.

Advantageously, ranges are effected along the axis z in the model having the same colour. For example, if a tooth is made, the lower part, towards the root, is made in a "dark" colour for a first range of z. The upper part of the tooth instead preferably includes the lighter colour and therefore for a second range of z, the same colour value is set. Between the two ranges, which substantially are uniform colour "strips", a colour gradient is realised, i.e. a gradual colour variation is effected so as to gradually vary the "dark" colour in the lower strip of the tooth and bring it to the value of the "light" colour of the upper strip of the tooth. The realisation of a colour gradient makes it possible to obtain a more realistic appearance of the model.

In the same way, N strips of uniform colour can be formed, blended as described above by as many colour gradients that "soften" the uniform colour starting from a band to the uniform colour of the next band.

Preferably, the colour variation is linear.

Each layer is preferably obtained by missing two resin colours, a "light" colour and a "darker" colour. The colour for each layer of the gradient is therefore calculated as a ratio between quantity of light coloured resin and of dark coloured resin to be introduced. The interpolation that is made is for example a cubic interpolation between a colour having a first initial ratio (between quantity of light coloured and dark coloured resin) and a colour having a second final ratio.

Preferably, obtaining a stereolithographic model of said at least part of tooth based on said second file by subsequent polymerization of layers of a liquid material arranged along the elevation axis Z, so as to obtain the stereolithographic model having for each coordinate value in the elevation axis Z a same colour as present in said second file includes injecting for each layer a first and a second liquid material of two different colours so as to generate said same colour.

Advantageously, this realisation variation by levels is achieved in a relatively simple way in a machine for stereolithography. Preferably, said machine is a 3D printer (or stereolithography machine) for laser stereolithography.

Preferably, in order to obtain said colour gradient, for each subsequent layer until the end of the third range, starting from the first same colour, the amount of the first liquid material is decreased/increased and the quantity of the second liquid material is increased/decreased correspondingly.

Advantageously, the colour variation is used mixing together two distinct colours, increase or decreasing one of the two according to the value of single_colour desired for a certain level.

Preferably, the stereolithographic model is obtained on a base.

Preferably, there is only one colour (i.e. a single colour value, single_colour, is imposed) for all points belonging to layers of z of 5 micron or 10 micron. 5/10 micron is generally the thinnest layer that can be spread and/or polymerized in a stereolithography machine.

Preferably, the file contains at least the coordinates and the value of colour of at least 4 points in the surface of portion of tooth.

The spatial coordinates can be:
- STL Format: the vertices are 3x4 triangles. An .stl file represents a solid whose surface was discretized in triangles. It consists of the X, Y and Z coordinates repeated for each of the three vertices of each triangle, with a vector to describe the orientation of the normal to the surface.
   The STL format has advantages such as simplicity, because it is very easy to generate and to process, although it does have the disadvantage of an approximate geometry and its data structure, while simple, may present the repetition of the same vertex several times.
   Files in STL format can be displayed or corrected with open source instruments like MeshLab, or commercial ones.
   The STL format is one of the main formats used in 3D printing.
- Other formats: associate a single set of coordinates with the vertices and regardless of which triangle is processed the vertex command points to a single set. It requires multiple calculations that engage the machine.

Preferably, the model is obtained by polymerizing resin inside a container.

Preferably, a base of the container is inclined relative to a horizontal plane.

Preferably, the container includes a recirculation for the resin.

The aforesaid objects and advantages, together with others that will be mentioned below, will become readily apparent in the following description of a preferred embodiment of the invention, which is provided by way of non-limiting indication with reference to the accompanying drawings, where:
- Figure 1 shows a block diagram of the method of the invention;
- Figures 2 through 4 schematically show respective steps of the method of Figure 1, applied on a stereolithography machine;
- Figure 5 schematically shows a dental prosthesis obtained with the method of the invention;
- Figure 6 schematically shows an apparatus used to implement the method of the invention;
- Figure 7 shows a schematic axonometric view of an additional embodiment of the stereolithography machine of the invention;
- Figure 8 shows the schematic lateral view of the additional embodiment of the stereolithography machine of the invention; and
- Figure 9 shows a sectioned detailed of the vat and of the modelling plate belonging to the stereolithography machine of the invention according to Figures 7 and 8.

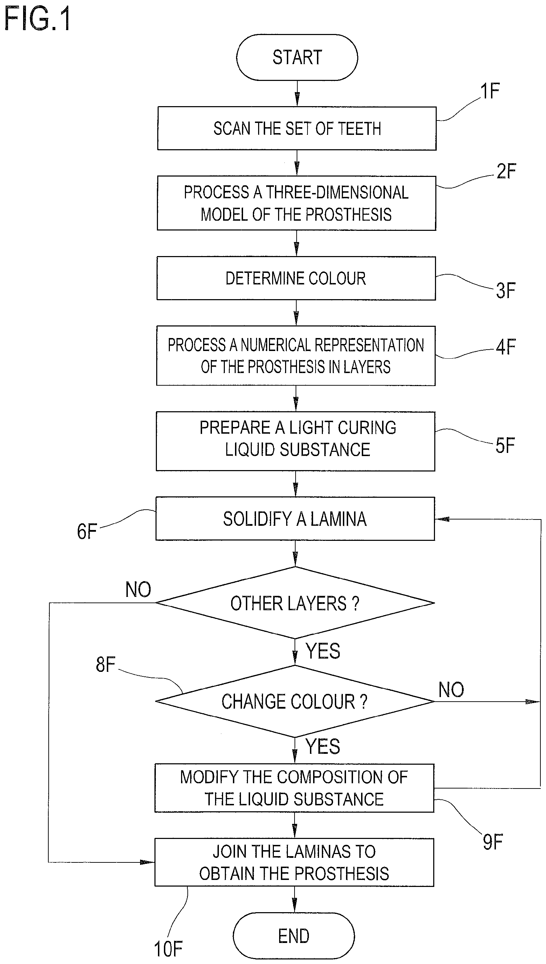

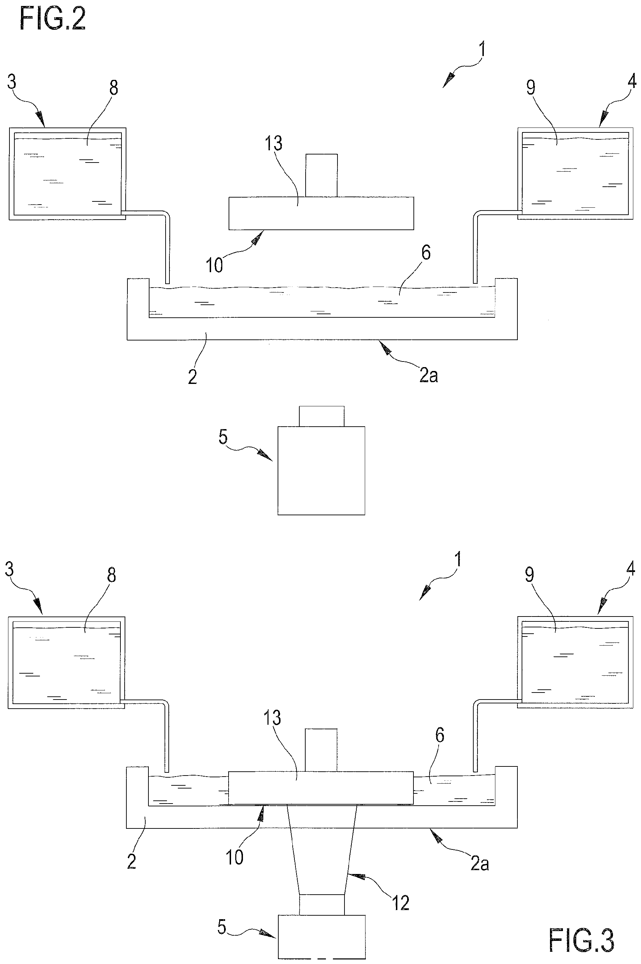

The method for the production of dental prostheses of the invention, schematically represented in Figure 1, is particularly suited to be implemented using a stereolithography machine 1 of the type represented in Figures 2 through 4.

It is specified that, in the present application, the term "prosthesis" is used to indicate an element intended to replace a natural tooth or a part thereof, such as an implant crown to be associated with an implant.

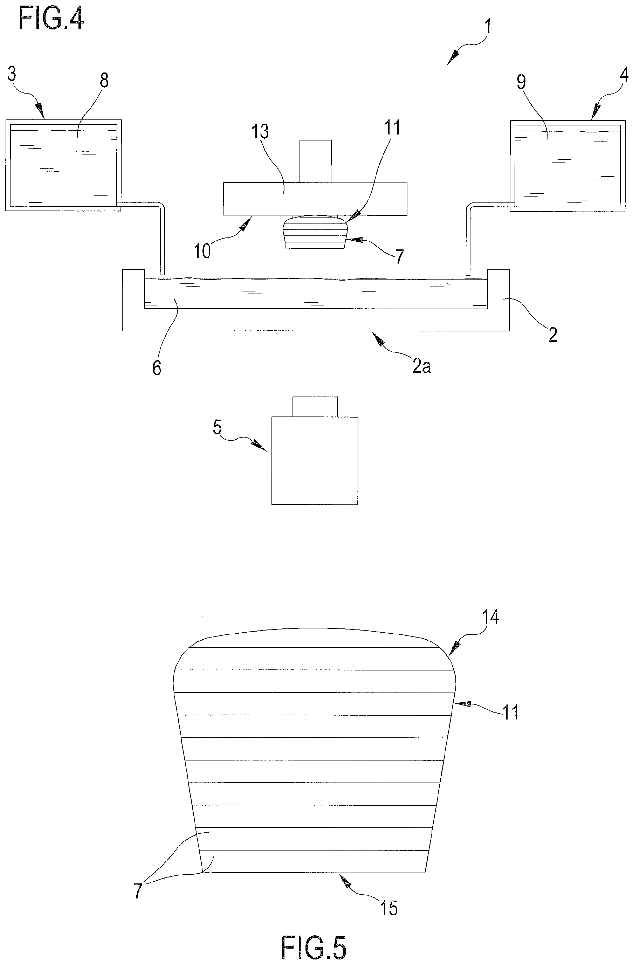

Figure 5 provides a simplified representation of a dental prosthesis 11, which extends between a top 14, corresponding to the incisal region intended to be directly exposed to mastication, and a neck 15, corresponding to the cervical region, intended to be oriented towards the gum.

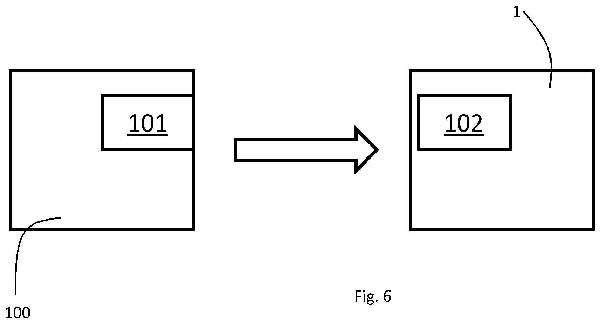

Preferably, the aforesaid numerical representation is obtained starting from a three-dimensional numerical model of the dental prosthesis 11, obtainable for example by professing the data received from an optical scanning device 100 (shown schematically in Figure 6), e.g. an intraoral tv camera or other equivalent devices, not shown in the figures but known in themselves. The scanning device can be positioned in the patient's mouth so as to detect the geometry of the tooth to be replaced with the prosthesis 11, and/or of the adjacent teeth, and the data thus obtained can be processed using methods that are known in themselves, to obtain the aforesaid three-dimensional numerical model.

Therefore, thanks to the optical scanning device, or scanner, 100, for a plurality of the points of the surface of the tooth the coordinates of the points in a three-dimensional space are saved in a file (whose visual representation is that of Figure 5), so that their geometric representation can be made.

This is step 1F (make the scan) and 2F (generate the file) of the method of the invention, as shown in Figure 1.

Additionally, also through the scanner 3, for each point of the three-dimensional representation, a value of the colour of that point is saved (step 3F).

Therefore, thanks to the steps 1F, 2F, 3F, a first file 101 is generated with Cartesian coordinate values (x, y, z) for a plurality of points of the tooth and with a value of the colour of the tooth for each of said points.

According to the method of the invention, a layered numerical representation of the dental prosthesis 11 is then defined, as indicated in Figure 5. In other words, the file 101 is processed to generate a second file 102, in which instead of the plurality of colours indicated above for each value of the z coordinate, the same colour is assigned to all points with the same z. For clarity of representation, the figure shows a lower number of layers than the one actually used.

For different values of z, i.e. for a range of values of z, the colour is the same, i.e. a same colour z is assigned not only to the points having the same z, but to points within a same range of coordinates z. Therefore in this way the file 102 includes "strips" of constant colour values for ranges of z.

In particular, the minimum value of the range of coordinates z for which the colour is the same is equal to the minimum dimension of a layer of resin obtainable using a stereolithographic apparatus.

A minimum dimension of a layer is, for example, 10 micron.

For example, the tooth is divided into a layer of uniform "light" colour in the upper part, a layer of uniform "dark" colour in the lower part and a colour gradient between the light colour and the dark colour in the intermediate part.

Preferably, therefore, the file 102 thus created includes the aforesaid numerical representation comprising a set of data that represent the shape and possibly the thickness of each layer to be obtained, together with the position of the layers in the object (step 4F).

The three-dimensional numerical model is processed in such a way as to generate a certain number of sections of the prosthesis 11 according to parallel planes positioned at predefined mutual distances, the sections corresponding to the layers of the numerical representation.

This file 102, which may be generated either in the scanner 100 or in a stereolithography machine 1, is then read by a stereolithography machine that interprets each band or layer with constant colour as a "layer" to be generated by photolithography.

For each layer of the aforesaid numerical representation, a photosensitive liquid substance, indicated in Figures 2-4 with the reference 6, is selectively solidified, so as to obtain a corresponding lamina 7 whose geometry matches the geometry of the layer.

It is specified that the adjective "photosensitive" is used in the present application to indicate the property of a substance to solidify as a result of exposure to a light radiation of predefined frequency.

The laminas 7 thus obtained are then made to adhere so as to obtain the dental prosthesis 11, as shown in the aforementioned Figure 5.

According to the invention, the composition of the liquid substance 6 is modified after at least one of the laminas 7 is solidified and before solidifying the next lamina. The composition is modified in such a way as to modify the colour of the liquid substance 6 and, hence, of the lamina that will result therefrom.

Therefore, a mixture is prepared (step 5F) which is then hardened (step 6F) for example by means of a laser that is appropriately scanned on the layer of liquid substance, polymerizing it.

If a colour change is necessary (step 8F) because there are other layers (step 7F), then the composition of the mixture is changed (step 9F).

The set of the laminas or layers generates the prosthesis of Figure 5 (step 10F).

It is readily understood that the method just described makes it possible to obtain a dental prosthesis 11 whose superficial colour varies gradually along a direction perpendicular to the plane of the laminas 7, i.e. along the axis z.

Moreover, since the variation of the colour can be controlled layer by layer varying the composition of the liquid substance 6, it is readily understood that the method described above makes it possible to obtain a dental prosthesis 11 whose colour approximates that of the patient's natural tooth in a more precise manner than achievable with the prior art processes described above, thereby attaining one of the objects of the invention.

It is also readily understood that the aforesaid method makes it possible to obtain the prosthesis 11 with a single machining process and with no need for superficial coating, thereby attaining a further object of the invention.

Preferably, the liquid substance 6 comprises a first photosensitive material able to polymerize as a result of exposure to a predefined light radiation, still more preferably of the type able to be polymerized by irradiation with an UV beam.

Preferably, the first photosensitive material is in liquid or paste form and the aforesaid polymerization causes it to solidify. Acrylate or methacrylate based materials have been demonstrated to be particularly suitable for use as photosensitive materials in the production of dental prostheses.

Preferably, to modify the composition of the liquid substance 6 one or more modifier materials, provided with different optical properties from the optical properties of the first photosensitive material, are added thereto. Clearly, the modified materials are compatible with the first photosensitive material so that their mixing therewith does not alter the photosensitive properties of the mixture, or alters them in a negligible manner for the purposes of obtaining the dental prosthesis 11.

The aforesaid modifier materials can comprise a dye, which is added to the liquid substance 6 to modify its hue. Clearly, multiple different dyes can be employed, alternatively or in combination, so as to obtain a prosthesis 11 provided with a colour and hue that are as close as possible to those of the natural tooth.

Alternatively to the dye or in combination therewith, one or more additional photosensitive materials can be used, able to polymerize as a result of exposure to the aforesaid predefined light radiation and with different colours from that of the first photosensitive material. For the aforesaid additional photosensitive materials, the same considerations made above for the first photosensitive material apply. Advantageously, the mixing of these additional photosensitive materials with the first photosensitive material makes it possible to obtain a homogeneous mixture and with photosensitive properties that are independent of the mixing ratio.

As modifier materials it is possible to use, alternatively to those described above or in addition thereto, at least partially transparent materials, for example glass or other similar materials, which make it possible to modify the transparency and/or the reflectance of the liquid substance 6 and, hence, of the laminas 7 obtained therefrom.

Alternatively to the above modifier materials or additionally thereto, reflecting materials can be used, for example titanium, aluminium, zirconium, silicon dioxide or others.

Preferably, the aforesaid at least partially transparent and/or reflecting materials are in powder form.

Preferably, the method also comprises mixing one or more of the aforesaid modifier materials with the liquid substance 6, so as to provide said substance with a homogeneous composition. The aforesaid mixing can take place in a container 2, indicated in Figures 2-4, in which the different components are dispensed separately through respective dispensing conduits connected to respective tanks. For this purpose, a mixing device 20, able to be positioned in the container 2, can be provided.

Alternatively or in addition to what has just been described, the mixing can take place concurrently with the dispensing of the components of the mixture. What has just been stated can be obtained for example by providing for the dispensing conduits of the different components of the mixture to the container 2 to converge into a single dispensing mouth, so that the mixing takes place directly during the dispensing step.

In file 102, for each layer (i.e. value of z or range of values of z) of the numerical representation a corresponding numerical value representing the colour of the layer is defined. Moreover, the composition of the liquid substance 6 is modified in such a way that, for each layer, the colour of the liquid substance 6 corresponds to the aforesaid numerical value relating to that layer. In this way it is possible to establish preventively the colour to be obtained for the dental prosthesis 11, then using it during the realisation phase to control the composition of the liquid substance 6 with precision.

The definition of the aforesaid numerical value takes place preferably by means of a preliminary measurement of the colour on the surface of a reference tooth of the patient for whom the prosthesis 11 is intended. In particular, the numerical values representing the colour of the various layers are calculated in such a way as to approximate the measured colour.

The aforesaid calculation can take place for example by computing an average, which may be weighed, of the colours measured on the points of the tooth corresponding to a respective lamina 7 of the prosthesis 11.

Preferably, the composition of the liquid substance 6 is modified multiple times during the realisation of the prosthesis 11, so as to obtain a plurality of laminas 7 having mutually different colours, based on the way the measured colour varies. More specifically, the composition is modified after solidifying each lamina 7 of the aforesaid plurality of laminas 7.

The colour of a natural tooth generally varies progressively proceeding from the top (incisal region) to the neck (cervical region). With the method of the invention, this effect can be reproduced in the dental prosthesis 11 making the various laminas 7 in sequence, starting from the one corresponding to one end of the tooth and proceeding towards the opposite end, progressively adding to the liquid substance 6 appropriate quantities of modifier materials in such a way that the percentage of said materials in the liquid substance 6 increases progressively.

For example, a natural tooth typically presence a lighter colour at the top and progressively darker proceeding towards the neck.

To reproduce this effect, the liquid substance 6 can be obtained as a mixture of a first photosensitive material able to polymerize as a result of exposure to a predefined light radiation, of a lighter colour, and of one or more modifier materials, of a darker colour than the previous one. In particular, according to the method the liquid substance 6 to be employed realise the lamina 7 corresponding to the top 14 of the prosthesis 11 is prepared using the first photosensitive material, possibly mixed with one or more modifier materials so as to obtain a liquid substance 6 whose colour corresponds to that of the summit 14 of the prosthesis 11. The subsequent laminas 7 are realised adding one or more modifier materials to the remaining liquid substance 6 so as to obtain a darker hue, matching that of the subsequent lamina or laminas. The process continues in the aforesaid way, progressively adding one or more modifier materials, until obtaining all the laminas 7 of the dental prosthesis 11.

Advantageously, proceeding as has just been described it is possible to minimise the quantity of components of the mixture dispensed before solidifying each lamina 7, reducing the mixing time and, hence, the processing time. Furthermore, the reduced quantity of components dispensed makes it possible to limit the mixing operations required to obtain a uniform hue in the liquid substance 6.

If a second photosensitive material able to polymerize as a result of exposure to the aforesaid predefined light radiation and of a darker colour than the first photosensitive material is used as a modifier material 9, the liquid substance 6 of the last lamina 7 may also consist, mostly or even entirely, of the second photosensitive material.

For the first photosensitive material and for the second photosensitive material, the above considerations apply.

The method described hitherto is particularly suitable for being realised by means of a stereolithographic process, as shown in Figures 2-4.

As is well known, in stereolithography a layer of photosensitive liquid substance 6 is prepared for each layer of the numerical representation, in this case the dental prosthesis 11, and the selective solidification of the aforesaid layer of liquid substance 6 is caused in the areas corresponding to the layer of the numerical representation by irradiation with a beam of light 12, preferably of the ultraviolet kind, to obtain a corresponding lamina 7, as shown in Figure 3.

The light beam 12 can have smaller dimensions than the work area, for example it can be a laser beam, which is able to solidify a narrow area of the layer of liquid substance 6. In this case, a control device is present that progressively guides the beam towards all the points of the layer of liquid substance 6. The control device may comprise a series of mirrors, or an actuation device on which the source of the beam is mounted and configured to actuate the source on a parallel plane to the layer of liquid substance 6, or whatever. In any case, the solidification of the layer of liquid substance 6 takes place progressively, actuating the beam of light 12 in such a way as to cover all the areas of the layer of liquid substance 6 to be solidified.

In the variation represented in Figures 2-4, the light beam 12 has dimensions at least equal to the solidification area, in such a way that the entire work area of the layer of liquid substance 6 can be solidified at the same time. In this case, a selection device is provided, not represented in the figures but known in itself, configured to inhibit the part of the light beam 12 corresponding to the areas of the layers of liquid substance 6 for which solidification is not required. The selection device can comprise a matrix of micro-mirrors, a masking device, or another device.

The laminas 7 are realised in the same sequence as the layers of the numerical representation. In particular, the first lamina 7 is solidified in contact with a support surface 10 belonging to a modelling plate 13, to which it adheres.

Similarly, each subsequent lamina 7 is solidified in contact with the preceding lamina 7, to which it adheres. In this way, the operation of adhesion of each lamina 7 to the preceding lamina takes place concurrently with the operation of solidification of the lamina.

Preferably, the liquid substance is prepared in a container 2, as shown in Figure 2.

The container 2 is filled with liquid substance 6 so that the level of said substance is at least equal to, and preferably, greater than, the thickness of the lamina 7 to be realised.

The layer of liquid substance 6 that is solidified to obtain a corresponding lamina 7 can be the one in contact with the bottom 2a of the container 2, or the one adjacent to the free surface of the liquid substance 6.

In the first case, represented in Figures 2-4, the bottom 2a of the container is transparent to the light beam 12. In this case the modelling plate 13 is actuated in such a way that the last lamina 7 already solidified or, if there is none, the support surface 10 of the modelling plate 13, is at a distance from the transparent bottom 2a equal to the thickness of the lamina 7 to be realised, as shown in Figure 3. The light beam 12 coming from below is then emitted, which traverses the transparent bottom 2a and impacts on the layer of liquid substance 6 interposed between the transparent bottom 2a and the support surface 10, in the case of the first lamina, or between the transparent bottom 2a and the surface of the preceding lamina 7, in the case of the subsequent laminas, so as to solidify it.

Subsequently, the modelling plate 13 is raised so as to separate the lamina 7 from the transparent bottom 2a, and the cycle is repeated for an additional lamina 7. It is thus readily understood that the prosthesis 11 is formed inferiorly to the modelling plate 13. Figure 4 shows a portion of prosthesis 11 obtained with the process just described, comprising a plurality of laminas 7.

According to a variant embodiment not shown in the figures, the layer of liquid substance 6 that is solidified is the one adjacent to the surface of the liquid substance 6 in the container 2. In this case, the operations are similar to those described in the previous case, except that the light beam 12 comes from above, that each lamina 7 is formed over the preceding lamina 7 and over the modelling plate 13, and that the definition of each layer of liquid substance 6 takes place lowering the modelling plate so as to positioned its upper surface or, if there is none, the previously solidified lamina, at a depth equal to the thickness of the lamina to be realised below the surface of the liquid substance 6.

It is readily understood that the method of the invention is applicable to both variations described above.

Preferably, the first lamina 7 to be solidified, positioned closer to the support surface 10 of the modelling plate 13, is the one corresponding to the top 14 of the prosthesis 11. This avoids geometric irregularities on the neck 15 deriving from contact with the support surface 10, which could compromise the quality of the coupling of the neck with the implant. The aforesaid geometric irregularities can derive, for example, both from superficial microfractures of the prosthesis 11 upon detachment from the support surface 10, and from the presence, between the aforesaid support surface and the first lamina 7, of spacer elements, obtained within the same stereolithographic process used to realise the prosthesis 11, which are generally provided to support the projecting parts of the prosthesis 11 during its construction and to facilitate the detachment of the prosthesis itself from the support surface 10. Construction of the prosthesis 11 starting from its top 14 entails that the neck 15 corresponds to the free end of the prosthesis 11 and can therefore be realised with high geometric precision.

It is also evident that, in variations of the invention, construction of the prosthesis 11 could also start from the lamina 7 corresponding to the neck 15. In this case, a surface finishing machining can be provided, subsequent to the detachment of the prosthesis 11 from the support surface 10 of the modelling plate 13.

The method of the invention described above is particularly suited to be applied in an integrated system for the realisation of dental prostheses by stereolithography.

The aforesaid system comprising an optical device for the determination of one or more optical properties of a tooth, not represented in the figures but known in itself, an electronic computer, also not represented in the figures but known in itself, which receives the data obtained by the optical device and combines them with the numerical representation in layers of the dental prosthesis 11 so as to connect to each layer a value representing each optical property, and stereolithography machine 1 controlled by the electronic computer and shown in Figures 2-4.

The aforesaid determination of the optical properties of the tooth may take place concurrently with the acquisition of the geometry of that tooth. In this case, the aforesaid optical device can coincide with the scanning device mentioned above.

The stereolithography machine 1 comprises the aforesaid container 2 for containing the liquid substance 6 and an irradiating device 5 able to cause the selective solidification of the first photosensitive material when it is present in the container 2.

The irradiating device 5 can comprise a laser source, which may be combined with a system of deflector mirrors.

According to a variation, the irradiating device 5 can comprise a digital micromirror device (DMD), a selective masking device, or any other device equivalent to them.

The stereolithography machine 1 also comprises a first tank 3 in communication with the container 2, in which is positioned the first photosensitive material 8, and one or more second tanks 4 also in communication with the container 2, which contain the corresponding modifier materials 9.

A feeding device is also provided, for causing the selective and controlled outflow of the first photosensitive material 8 and/or of one or more modifier materials 9 towards the container 2. The feeding device, not represented in the figures, can comprise a pumping device, one or more shut-off valves, and/or any device able to cause the aforesaid selective outflow.

The electronic computer is configured to control the feeding device on the basis of the values of the optical properties for any layer of the numerical representation, so as to adapt the composition of the liquid substance present in the container 2 to the optical properties required for each lamina 7.

According to a variation, not shown in the figures, the container 2 and the tanks are constructed in a single piece, so that as a whole they define a cartridge. The cartridge comprises removable connection elements and a housing belonging to the stereolithography machine 1.

Advantageously, employment of the aforesaid cartridge facilitates use of the system, inasmuch as it allows the user not to have to select the components to be used every time, offering well tested combinations.

Clearly, different types of cartridge can be used, which are differentiated by the different combination of components to be mixed to obtain the liquid substance 6.

Advantageously, the aforesaid different types of cartridge make it possible to expand the field of optical properties obtainable for the dental prosthesis 11. In particular, the user will be able to choose the type of cartridge that enables him/her to obtain a prosthesis 11 with an appearance that more closely resembles the appearance of the teeth of each individual patient.

In view of the above, it is readily understood that the method and the system described above achieve all the objects set.

In particular, the possibility of controlling the optical properties of each layer of the dental prosthesis makes it possible to obtain prostheses whose aesthetic appearance is close to that of a natural tooth.

Furthermore, the aforesaid possibility allows the obtainment of a potentially infinite number of different shades for equal materials used, simply by combining the materials in a different way.

Moreover, the prosthesis is obtained in a single machining process, hence in a particularly simple and fast manner, with no need for superficial coatings.

Obviously, a person having ordinary skill in the art, to meet specific and contingent needs, may make numerous modifications and variants to the method for the production of a dental article according to the present invention, without thereby departing from the scope of protection defined by the appended claims.

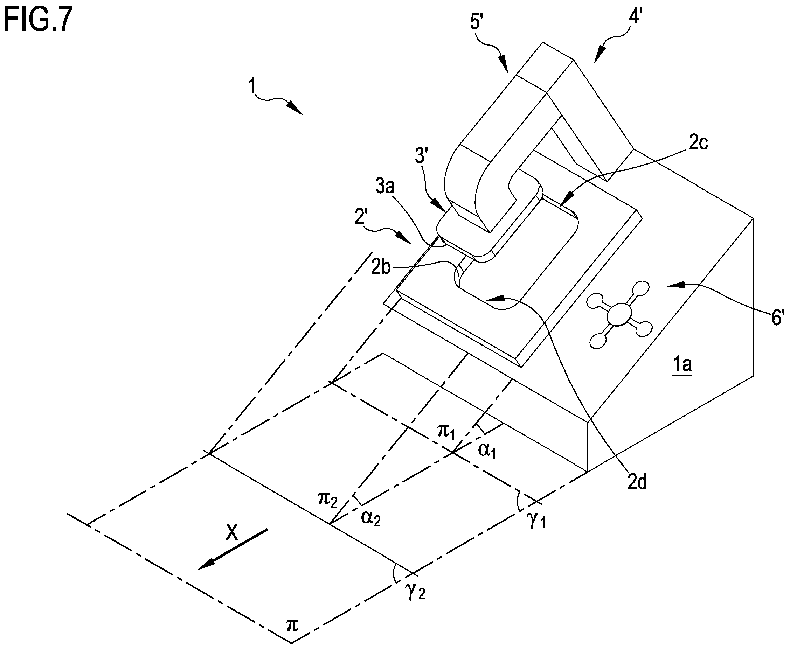

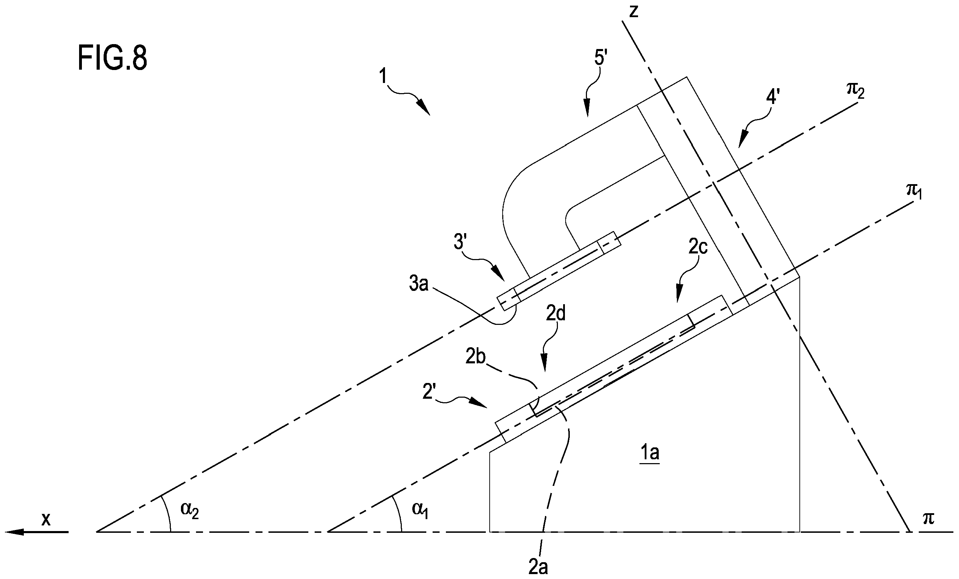

The stereolithography machine of the invention, according to an additional preferred embodiment, is shown in Figures 7 and 8, where it is indicated in its entirety with the reference number 1'.

As can be observed in said figures, the stereolithography machine 1 comprises a support structure 1a able to be set to bear on a substantially horizontal bearing plane n, for example the upper surface of a laboratory table.

As shall be clarified below, on the aforesaid bearing plane n a reference direction X is identified, defined more precisely below in the present description.

Such a support structure 1a is configured to support a vat 2' provided in turn with a bottom 2a and with lateral walls 2b so as to contain a photosensitive liquid substance, preferably a photosensitive resin.

The bottom 2a is transparent so as to allow the passage of a light beam originating from a source, not represented in the figures but known in itself, positioned inferiorly to the vat 2'. Said light beam is clearly able to selectively solidify a layer of the resin positioned adjacent to the bottom 2a itself.

There is also a modelling plate 3' provided with a modelling surface 3a facing the bottom 2a, substantially in parallel position, superiorly to the vat 2', as shown in Figure 2.

The modelling surface 3a is used to support the first layer of the three-dimensional object that is solidified, which in turn serves as a support for a second layer, and so on for the subsequent ones.

The modelling plate 3' is supported by a support group 5', in turn associated with the support structure 1a through actuating means 4' For the movement of the support group 5' and, consequently, of the plate 3', according to a direction of actuation Z orthogonal to the bottom 2a, as indicated in Fig. 8.

Preferably but not necessarily, the actuating means 4' comprise a servo motor, for example of the stepper type, not shown in the figures.

Preferably, the aforesaid servo motor drives a worm screw, also not shown in the figures, which in turn is operatively associated with the support group 5'.

The actuating means 4' then allow the displacement of the modelling plate 3' according to the direction of actuation Z so as to position the modelling surface 3a, or the surface of the last solidified layer of the object, immersed in the resin at a distance from the bottom 2a that matches the thickness of the subsequent layer to be realised.

According to the invention, in the stereolithography machine 1 of the invention, at least during the actual stereolithographic process for the production of a three-dimensional object, the vat 2', the support group 5' and the modelling plate 3' are coupled with the support structure 1a in such a way that the modelling surface 3a and the bottom 2a lie respectively on a plane π1 and a plane π2 both incident to the aforesaid bearing plane π with angles of incidence α1 and α2 and defining incidence straight lines γ1 and γ2 orthogonal to the aforesaid reference direction X, as schematically shown in Figures 7 and 8.

Incidentally, the expression "stereolithographic process for the production of a three-dimensional object" means the set of the operating steps performed for the selective solidification of the resin for each of the layers that comprise the aforesaid object.

Essentially, returning to the inventive concept of the present invention, in the stereolithography machine 1' the bottom 2a of the vat 2' and the modelling surface 3a belonging to the modelling plate 3' are positioned inclined with angles of incidence α1 and α2, relative to the bearing plane π, at least during the execution of the aforesaid stereolithographic process.

This arrangement allows the obtainment of numerous advantages compared to the production of three-dimensional objects carried out using the stereolithography machines of the prior art which instead have the bottom of the vat and, jointly, the modelling surface in substantially horizontal position, parallel to the bearing plane n.

First of all, the inclined disposition of the bottom 2a relative to the bearing plane n makes is possible to exploit the force of gravity for the outflow of the resin introduced at a first end 2c of the vat 2' defined at a distal position relative to the aforesaid incident straight line γ1, hence placed at a higher elevation, towards the second end 2d of the same vat 2' defined in proximity to said incidence straight line γ1, hence at a lower elevation, taking as a reference the bearing plane n, as schematically shown in Figure 8. Clearly, as visible in the aforesaid Figure 2, the two ends 2c and 2d of the vat 2' are defined one after the other according to the aforesaid reference direction X.

The solution of the invention thus advantageously makes it possible to rapidly fill the depression that is determined as a result of the rising of the modelling plate 3' at the end of the realisation of a layer, as described above, although the stereolithography machine 1' lacks the aforesaid levelling means. In fact, the outflow of the resin by gravity requires times that are comparable to, if not shorter than those required by the levelling transaction by the aforesaid levelling means.

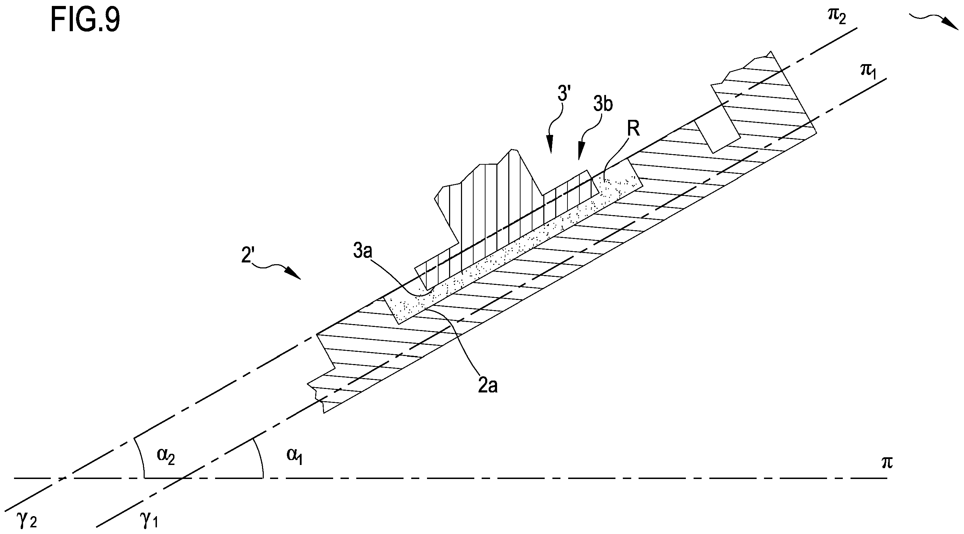

In this regard, in the moment when the modelling plate 3' is in lowered position and immersed in the resin during the realisation of a layer of the three-dimensional object, the same resin R present at the first end 2c of the vat 2', by gravity tends to descend and to impact, accumulating, at the upper edge 3b of the modelling plate 3', as shown schematically in Figure 9. This situation remains stable as long as the modelling plate 3' remains lowered during the realisation of a specific layer of the object. Following the raising of the modelling plate 3', at the end of the realisation of said layer, and, consequently, when the aforesaid depression is determined, advantageously, the resin accumulated at the upper end 3b of the same modelling plate 3' is immediately able to flow downwards by gravity and rapidly to fill the previously formed depression.

According to the aforesaid first preferred embodiment of the invention, the vat 2', the support group 5' and the modelling plate 3' are coupled with the support structure 1a in such a way that the value of the aforesaid angles of incidence α1 and α2 between the two incident planes π1 and π2 and the bearing plane n, is pre-set and remains unchanged both during the actual stereolithographic process and in the resting condition of the stereolithography machine 1'

In the present context, the term "resting condition of the stereolithography machine" means both the situation in which the stereolithography machine is shut down and the situation in which the stereolithography machine is in a configuration and setting condition.

In other words, in the aforesaid first preferred embodiment of the invention, the sole coupling disposition of the vat 2', of the support group 5' and of the modelling plate 3' relative to the support structure 1a can be the one described above, obviously apart from the possibility of the support group 5' and of the modelling plate 3' to move along the aforesaid direction of actuation Z by the actuation means 4'.

Preferably but not necessarily, the value of the angles of incidence α1 and α2 is selected in the range between 1/8π rad and 3/8n rad preferably around n/4 rad.

## Claims

1. Method for the production of a dental article, the method comprising:
- performing a three-dimensional scan (1F) of a portion of a dental arch including at least part of a tooth;
- generating (2F, 3F) a first file containing a three-dimensional model of the at least part of tooth scanned, said three-dimensional model comprising (i) spatial coordinates, in a three-dimensional space having an elevation axis Z, of a plurality of points belonging to an outer surface of the at least part of the tooth scanned and (ii) a colour of the outer surface associated with each point of the plurality;
- processing (4F) the first file by associating a same colour with all the points having the same coordinate value in the elevation axis Z, thereby obtaining a second file;
- sending the second file to a laser stereolithography machine (1);
- obtaining a stereolithographic model of said at least part of tooth based on said second file by subsequent polymerization of layers (7) of a liquid material arranged along the elevation axis Z, so as to obtain the stereolithographic model having for each coordinate value in the elevation axis Z a same colour as present in said second file which includes:
∘ injecting for each layer a first (8) and a second (9) liquid material of two different colour so as to generate said same colour; and
∘ scanning the layer of liquid substance by means of a laser (5), polymerizing it.

2. Method according to claim 1, wherein for a certain coordinate value in the elevation axis Z, said same colour is calculated depending on the colours of the points of the outer surface for such coordinate value in the elevation axis Z as present in the first file.

3. Method according to claim 2, wherein said same colour is a colour averaged among the colours of the points present in the first file having such coordinate value in the elevation axis Z.

4. Method according to claim 2, wherein said same colour is the colour present the most number of times in the points present in the first file having such coordinate value in the elevation axis Z.

5. Method according to claim 2, wherein processing the first file by associating a same colour with all the points having the same coordinate value in the elevation axis Z, includes;
- associating a same first colour with all the points of the first file having coordinates values in the elevation axis Z within a first range;
- associating a same second colour with all the points of the first file having coordinate values in the elevation axis Z within a second range;
- associating with each point of the first file having a value of elevation coordinate Z within a third range of values of elevation coordinate Z comprised between the last value of elevation coordinate Z of the first range and the first value of elevation coordinate Z of the second range, a colour equal to a colour gradient between the same first colour and the second same colour, the colour gradient depending on the value of the elevation coordinate Z in the third range.

6. Method according to claim 5, wherein, in order to obtain said colour gradient, for each subsequent layer until the end of the third range, starting from the first same colour, the amount of the first liquid material is decreased/increased and the quantity of the second liquid material is increased/decreased correspondingly.

## Patentansprüche

1. Verfahren zur Herstellung eines Dentalartikels, wobei das Verfahren folgende Schritte umfasst:
- Durchführen eines dreidimensionalen Scans (1F) eines Teils einer Zahnreihe, die zumindest einen Teil eines Zahns umfasst;
- Erzeugen (2F, 3F) einer ersten Datei, die ein dreidimensionales Modell des zumindest einen Teils des gescannten Zahns beinhaltet, wobei das dreidimensionale Modell (i) Raumkoordinaten, in einem dreidimensionalen Raum mit einer Höhenachse Z, einer Vielzahl von Punkten, die zu einer Außenfläche des zumindest einen Teils des gescannten Zahns gehören, und (ii) eine Farbe der Außenfläche umfasst, die jedem Punkt der Vielzahl zugeordnet ist;
- Verarbeiten (4F) der ersten Datei durch Zuordnen einer gleichen Farbe zu allen Punkten mit dem gleichen Koordinatenwert auf der Höhenachse Z, wodurch eine zweite Datei erhalten wird;
- Senden der zweiten Datei an eine Laserstereolithographie-Vorrichtung (1);
- Erhalten eines stereolithographischen Modells des zumindest einen Teils des Zahns basierend auf der zweiten Datei durch eine anschließende Polymerisation von Schichten (7) eines entlang der Höhenachse Z angeordneten flüssigen Materials , um das stereolithographische Modell zu erhalten, das für jeden Koordinatenwert in der Höhenachse Z die gleiche Farbe wie in der zweiten Datei aufweist, umfassend:
• Injizieren eines ersten (8) und eines zweiten (9) flüssigen Materials zweier unterschiedlicher Farben für jede Schicht, um die gleiche Farbe zu erzeugen; und
• Scannen der Schicht aus der flüssigen Substanz mittels eines Lasers (5), der diese polymerisiert.

2. Verfahren nach Anspruch 1, wobei für einen bestimmten Koordinatenwert in der Höhenachse Z die gleiche Farbe in Abhängigkeit von den Farben der Punkte der Außenfläche für einen solchen, wie in der ersten Datei vorhandenen Koordinatenwert in der Höhenachse Z berechnet wird.

3. Verfahren nach Anspruch 2, wobei die gleiche Farbe eine Farbe ist, die aus den Farben der in der ersten Datei vorhandenen Punkte mit einem solchen Koordinatenwert in der Höhenachse Z gemittelt ist.

4. Verfahren nach Anspruch 2, wobei die gleiche Farbe die Farbe ist, die am häufigsten in den in der ersten Datei vorhandenen Punkten mit einem solchen Koordinatenwert in der Höhenachse Z vorliegt.

5. Verfahren nach Anspruch 2, wobei das Verarbeiten der ersten Datei durch Zuordnen der gleichen Farbe zu allen Punkten mit dem gleichen Koordinatenwert in der Höhenachse Z Folgendes umfasst:
- Zuordnen einer gleichen ersten Farbe zu allen Punkten der ersten Datei mit Koordinatenwerten in der Höhenachse Z innerhalb eines ersten Bereichs;
- Zuordnen der gleichen zweiten Farbe zu allen Punkten der ersten Datei mit Koordinatenwerten in der Höhenachse Z innerhalb eines zweiten Bereichs;
- Zuordnen zu jedem Punkt der ersten Datei mit einem Wert der Höhenkoordinate Z innerhalb eines dritten Wertebereichs der Höhenkoordinate Z, der zwischen dem letzten Wert der Höhenkoordinate Z des ersten Bereichs und dem ersten Wert der Höhenkoordinate Z des zweiten Bereichs liegt, eine Farbe, die einem Farbverlauf zwischen der gleichen ersten Farbe und der zweiten gleichen Farbe entspricht, wobei der Farbverlauf vom Wert der Höhenkoordinate Z im dritten Bereich abhängt.

6. Verfahren nach Anspruch 5, wobei, um den Farbverlauf für jede nachfolgende Schicht bis zum Ende des dritten Bereichs, ausgehend von der ersten gleichen Farbe, zu erhalten, die Menge des ersten flüssigen Materials reduziert/erhöht wird und die Menge des zweiten flüssigen Material dementsprechend erhöht/reduziert wird.

## Revendications

1. Procédé de production d'un article dentaire, le procédé comprenant :
- la réalisation d'un balayage tridimensionnel (1F) d'une partie d'une arcade dentaire incluant au moins une partie d'une dent ;
- la génération (2F, 3F) d'un premier fichier contenant un modèle tridimensionnel de l'au moins une partie de dent balayée, ledit modèle tridimensionnel comprenant
(i) des coordonnées spatiales, dans un espace tridimensionnel présentant un axe d'élévation Z, d'une pluralité de points appartenant à une surface externe de l'au moins une partie de dent balayée et (ii) une couleur de la surface externe associée à chaque point de la pluralité ;
- le traitement (4F) du premier fichier en associant une même couleur à tous les points ayant la même valeur de coordonnée dans l'axe d'élévation Z, ce qui permet d'obtenir un second fichier ;
- l'envoi du second fichier à une machine de stéréolithographie (1) ;
- l'obtention d'un modèle stéréolithographique de ladite au moins une partie de dent sur la base dudit second fichier par polymérisation ultérieure de couches (7) d'un matériau liquide disposées le long de l'axe d'élévation Z, afin d'obtenir le modèle stéréolithographique présentant pour chaque valeur de coordonnée dans l'axe d'élévation Z une couleur identique à celle présente dans ledit second fichier qui inclut :
- l'injection pour chaque couche d'un premier (8) et d'un second (9) matériau liquide de deux couleurs différentes afin de générer ladite couleur identique ; et
- le balayage de la couche de substance liquide au moyen d'un laser (5), ce qui la polymérise.

2. Procédé selon la revendication 1, dans lequel pour une certaine valeur de coordonnée dans l'axe d'élévation Z, ladite couleur identique est calculée en fonction des couleurs des points de la surface externe pour une valeur de coordonnée dans l'axe d'élévation Z telle que présente dans le premier fichier.

3. Procédé selon la revendication 2, dans lequel ladite couleur identique est une couleur obtenue par moyenne des couleurs des points présents dans le premier fichier présentant une certaine valeur de coordonnée dans l'axe d'élévation Z.

4. Procédé selon la revendication 2, dans lequel ladite couleur identique est la couleur présente le plus grand nombre de fois dans les points présents dans le premier fichier présentant une certaine valeur de coordonnée dans l'axe d'élévation Z.

5. Procédé selon la revendication 2, dans lequel le traitement du premier fichier en associant une couleur identique à tous les points présentant la même valeur de coordonnée dans l'axe d'élévation Z, inclut :
- l'association d'une première couleur identique à tous les points du premier fichier présentant une valeur de coordonnée dans l'axe d'élévation Z dans une première plage ;
- l'association d'une seconde couleur identique à tous les points du premier fichier présentant une valeur de coordonnée dans l'axe d'élévation Z dans une deuxième plage ;
- l'association à chaque point du premier fichier présentant une valeur de coordonnée d'élévation Z dans une troisième plage de valeurs de coordonnée d'élévation Z comprise entre la dernière valeur de coordonnée d'élévation Z de la première plage et la première valeur de coordonnée d'élévation Z de la deuxième plage, d'une couleur égale à un gradient de couleur entre la première couleur identique et la seconde couleur identique, le gradient de couleur dépendant de la valeur de la coordonnée d'élévation Z dans la troisième plage.

6. Procédé selon la revendication 5, dans lequel, pour obtenir ledit gradient de couleur, pour chaque couche ultérieure jusqu'à la fin de la troisième plage, en débutant de la première couleur identique, la quantité du premier matériau liquide est diminuée/augmentée et la quantité du second matériau liquide est augmentée/diminuée en conséquence.
